# EUROPEAN PATENT APPLICATION

(11) **EP 1 071 006 A2**
(43) Date of publication of application: **24.01.2001**
(21) Application number: 00306110.8
(22) Date of filing: 18.07.2000
(51) Int. Cl.: G06F 3/033, G06F 3/023

(54) **Method and apparatus for heuristically configuring softkey functions for a reduced number of softkeys**

(30) Priority: 23.07.1999 US 145441; 08.12.1999 US 459389
(71) Applicant: Phone.Com Inc., Redwood City, CA 94063 (US)
(72) Inventor: Smethers, Paul A., Cupertino, CA 95014 (US); Chen, David A., San Carlos,CA 94070 (US); Bhasin, Aditya, Santa Clara, CA 95051 (US)
(74) Representative: Ablett, Graham Keith

(57) **Abstract**

The present invention relates to a method and apparatus that provides for user interaction with soft key functions on a wireless communication device (100) where the number of softkey functions exceeds the number of physical softkeys available. An initial assignment of softkey functions to the available softkeys (118) on the user interface of the wireless communication device is made. Thereafter, subsequent softkey assignments may be altered through an interaction with the navigation keys (120). Additionally, the user is given the option of selecting among different softkey function presentation and alteration schemes.

## Description

### BACKGROUND OF THE INVENTION

### Field of the Invention

The present invention relates to wireless communication devices and, more particularly, to a method and apparatus for assigning softkey functions to softkeys where the number of softkey functions exceeds the number of available softkeys on the user interface of the device.

### Description of the Related Art

Reduced prices for static memory devices (e.g. SDRAMs and DRAMs) and microprocessors have made it possible for the manufactures of wireless communication devices (e.g. two-way pagers, mobile phones, palm sized computing devices and personal digital assistants (PDAs)) to put more processing power and memory at the disposal of consumers, while at the same time pricing the units at a price which will allow them to obtain popularity in the marketplace. The manufacturers of these wireless communication devices and the associated service providers have developed numerous applications, which give them some functionality and features similar to that found in personal computers. For example, some of these devices are capable of executing word processing applications, browsers, and email applications.

Competition between the various device manufactures and service providers for market share in this lucrative market has resulted in the rapid development of devices and services that appeal to the consumer. Among these developments are wireless communication devices that fit easily into the palm of a hand. Another one of the developments that has proved popular is the use of oversized (larger than 4 X 16 characters) liquid crystal display (LCD) screens. The manufacturers of smaller devices that utilize these oversized LCD screens are forced to reduce the size of the user interface (e.g. the phone keypad) to accommodate the larger screens. To this end, some manufactures reduce the number of softkeys (e.g., input elements on the user interface of the mobile device with re-definable functions) on the wireless communication devices (e.g. from 2 to 1). This reduction in the number of soft keys may limit the number of actions a user may perform when interacting with a particular file or application that is being processed by the wireless communication device.

What is needed is a method and apparatus that can enable a user of a wireless communication device to utilize all available soft key functions regardless of the number of physical softkeys present on a wireless communication device.

### SUMMARY OF THE INVENTION

An object of the present invention is to provide a method and apparatus that permits a user to have access to all available softkey functions where the number of softkey functions exceeds the number of physical softkeys available on the user interface of a wireless communication device. More specifically, the present invention utilizes the navigation keys and software control to change the functions assigned to the available softkeys. Additionally, the user is given the option of selecting among different presentation and alteration schemes for the assignment of softkey functions to softkeys.

In one embodiment of the present invention, an initial set of softkey functions are assigned to the available softkeys on the user interface of the wireless communication device and if there are additional unassigned softkey functions then the user is given an indication to that effect (e.g. ">"). The user may then reassign softkey functions through an interaction with a particular portion of the navigation key group (e.g. the horizontal navigation keys).

In another embodiment of the present invention, an initial set of softkey functions are assigned to the available softkeys on the wireless communication device and if there are additional softkey functions, the user is presented with a screen overlay which indicates the active soft key functions and any additional softkey functions. The user may then navigate through the list and reassign softkey functions through an interaction with a particular portion of the navigation key group (e.g. the horizontal navigation keys).

In another embodiment of the present invention, an initial set of softkey functions are assigned to the available softkeys on the wireless communications device and if there are addition softkey functions the user is given an indication to that effect. The user may cause the available softkey functions to cycle through the available softkeys at a predetermined time interval through an interaction with a predetermined input element (e.g. the navigation key group).

The foregoing and other objects, features, and advantages of the invention will become more apparent from the following detailed description of preferred embodiments, which proceeds with reference to the accompanying drawings.

### BRIEF DESCRIPTION OF THE DRAWINGS

The present invention will be readily understood by the following detailed description in conjunction with the accompanying drawings, wherein like reference numerals designate like structural elements, and in which:
Figures 1A-1D illustrate schematics of a wireless communication device that may be used to implement the method of the present invention;
Figure 2 illustrates a functional block diagram of a wireless communication device described in Figures 1A-1D;
Figure 3 illustrates a representative markup language card having multiple softkey functions that may be utilized to provide the screen displays illustrated in Figures 1A-1D;
Figure 4 illustrates a rotation order that may be utilized for the softkey functions illustrated in Figure 3;
Figures 5A-5C are flow diagrams of the steps involved in managing softkey assignments for a wireless communication device having a reduced number of softkeys.

### DETAILED DESCRIPTION OF THE INVENTION

The invention pertains to a method and an apparatus that enables a wireless communication device to manage softkey function assignments where the number of softkey functions exceeds the number of softkeys available on the user interface of the device.

Wireless communication devices, also referred to as two-way interactive communication devices, wireless client devices or mobile devices, include but are not limited to personal digital assistant (PDA) like devices, mobile phones, or wireless capable remote controllers. Such devices typically have significantly less memory and processing capability than is found in desktop and laptop computers. The display screens associated with the subject mobile devices may have the capability to display image maps (e.g. bitmaps, JPEGs and GIFs) and screen overlays.

### Notation and Nomenclature

In the following detailed description of the present invention, numerous specific details are set forth in order to provide a thorough understanding of the present invention. However, it will become apparent to those skilled in the art that the present invention may be practised without these specific details. In other instances, well known methods, procedures, components, and circuitry have not been described in detail to avoid unnecessarily obscuring aspects of the present invention.

The detailed description of the present invention in the following are presented largely in terms of procedures, steps, logic blocks, processing, and other symbolic representations that resemble data processing devices coupled to networks. These process descriptions and representations are the means used by those experienced or skilled in the art to most effectively convey the substance of their work to others skilled in the art.

The present invention is a method and apparatus, which will allow the user of a mobile device (i.e., personal digital assistants (PDAs), cellular phones, or wireless capable remote controllers) to access and utilize softkey functions when the number of available softkey functions exceeds the number of soft keys available on the user interface of the mobile device. The method along with the apparatus to be described in detail below is a sequence of processes or steps leading to a desired result. These operations or processes are those requiring physical manipulations of physical quantities. Usually, though not necessarily, these quantities may take the form of electrical signals capable of being stored, transferred, combined, compared, displayed and otherwise manipulated in a computer system or electronic computing devices. It proves convenient at times, principally for reasons of common usage, to refer to these signals as bits, values, elements, symbols, operations, messages, terms, numbers, or the like. It should be borne in mind that all of these similar terms are to be associated with the appropriate physical quantities and are merely convenient labels applied to these quantities. Unless specifically stated otherwise as apparent from the following description, it is appreciated that throughout the present invention, discussions utilizing terms such as "processing" or "computing" or "verifying" or "displaying" or the like, refer to the actions and processes of a computing device that manipulates and transforms data represented as physical quantities within the computing device's registers and memories into other data similarly represented as physical quantities within the computing device or other electronic devices.

### The Preferred Embodiments

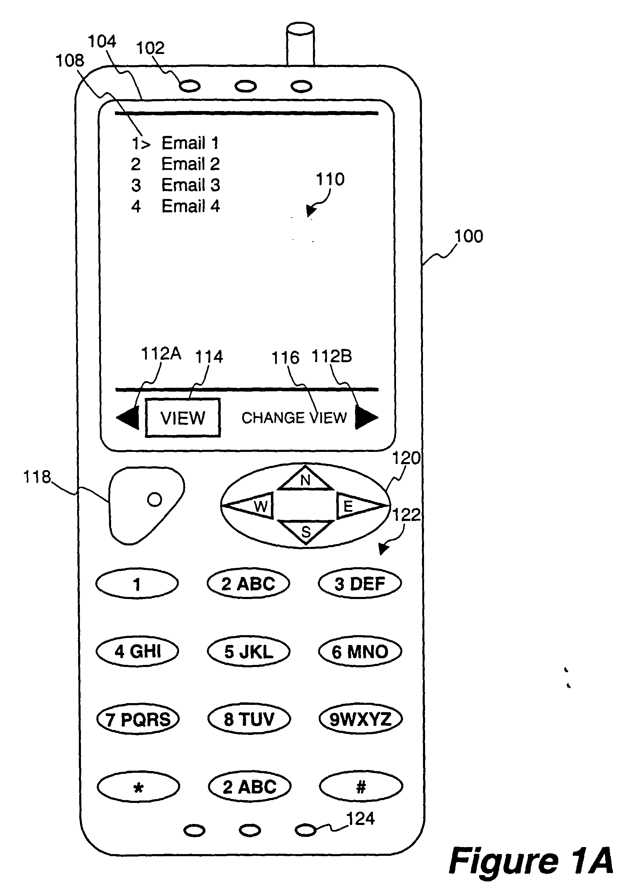

Referring now to the drawings, in which like numerals refer to like parts throughout the several views. Figures 1A-1D illustrate schematics of a wireless communication device that may be used to implement the method of the present invention. Figure 1A is a schematic of a mobile device 100 according to one embodiment of the invention. The mobile device 100 communicates with remote entities through a wireless network (not shown). Examples of commonly used wireless networks include Cellular Digital Packet Data (CDPD), Global System for Mobile Communications (GSM), Code Division Multiple Access (CDMA) and Time Division Multiple Access (TDMA), to name a few.

Mobile device 100 is comprised of speaker 102, an oversized LCD display screen 104, softkey 118, navigation key group 120, phone keypad 122, and microphone 124. The typical phone keypad, as commonly seen, comprises twelve buttons. Of the twelve buttons, ten buttons are consecutively numbered, one for each of the numerals 0 to 9, respectively, one button is for "*" sign and the other button is for "#" sign. Further it would be understood by those of ordinary skill in the art that the present invention may be practised using other types of input interfaces (e.g., softkeys, iconic screens) and keypad configurations.

The content displayed on display screen 104 includes a selection indicator 108, selection group 110, additional softkey function indicators 112A and 112B, assigned softkey function indicator 114, and an unassigned softkey indicator 116. The content (referred to as markup language entities or cards herein) displayed on display screen 104 may be generated from a markup language such as Handheld Device Markup Language (HDML) and Wireless Markup Language (WML). HDML and WML are similar to HyperText Markup Language (HTML) in that they are tag based document languages. HDML and WML use a set of commands or statements specified in a group of cards (referred to as a deck) that specify how information is to be displayed on a display screen of the mobile device 102 and how mobile device 102 operates with respect to user interaction with the display screen. Normally, a number of cards are grouped into the deck and the deck is exchanged between the mobile devices 102 and a remote server device (not shown).

The markup language entities are generally processed by a micro-browser, which typically requires less computing power and memory than the HTML browsers used in personal computer. One such micro-browser is available from Phone.com located at 800 Chesapeake Drive, Redwood City, CA 94063, the assignee of the present invention.

As used herein, a display screen is the physical display apparatus in a mobile device, such as display screen 104. A screen display is an image presented or displayed on the display screen. Further it is understood that a display apparatus may be graphics-based and may or may not have distinct display lines.

Navigation key group 120 is comprised of a four-way key. The portion of the navigation key group 120 labelled "N" and "S" is generally used for the vertical movement (e.g. up and down) of screen elements such as selection indicator 108. The portion of the navigation group 120 labelled "E" and "W" is generally used for horizontal movement (e.g. left and right) of screen elements. One of ordinary skill in the art would understand that the functions of navigation key group 120 may be performed by individual elements. Additionally, navigation key groups having more or fewer degrees of freedom may be utilized with out deviating from the principles of the invention.

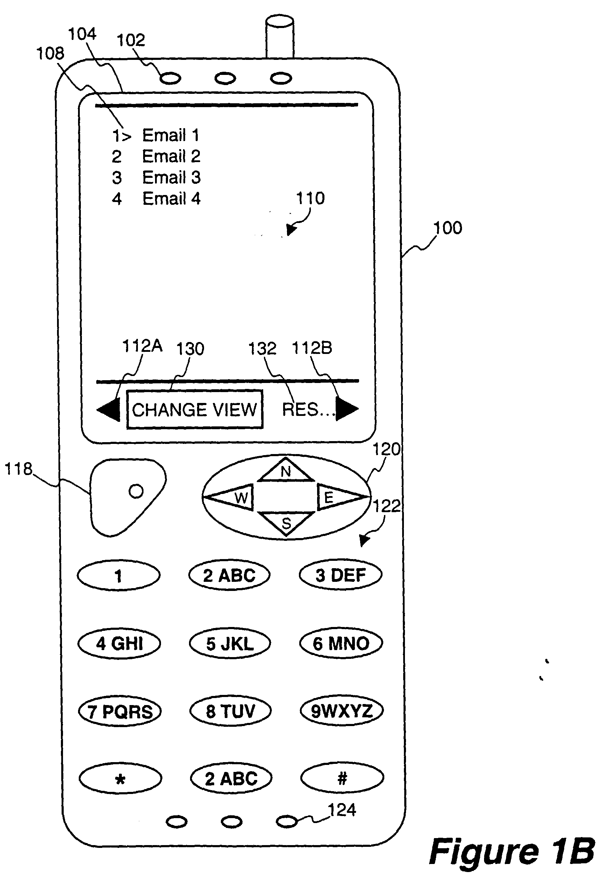

Mobile device 100 has a single softkey 118, which has been assigned the softkey function"VIEW". Mobile device 100 also has additional available softkey functions as is indicated by softkey function indicators 112A and 112B and unassigned softkey indicator 116. According to the principles of the present invention, a user desiring to change the function assignment of softkey 118 from"VIEW" to"CHANGE VIEW" may do so by interacting with the "E" portion of navigation key group 120 to scroll right. Softkey function indicators 112A and 112B provide an indication that there are at least two additional unseen softkey functions. Specifically, a user may access a softkey function indicated by softkey function indicator 112A by interacting once with the "W" portion of navigation key group 120. Similarly, a user may access a softkey function indicated by softkey function indicator 112B by interacting twice with the "E" portion of navigation key group 120. After a single user interaction with the "E" portion of navigation key group 120, the present invention would cause the screen display of mobile device 100 to reflect a changed softkey assignment as illustrated in Figure 1B.

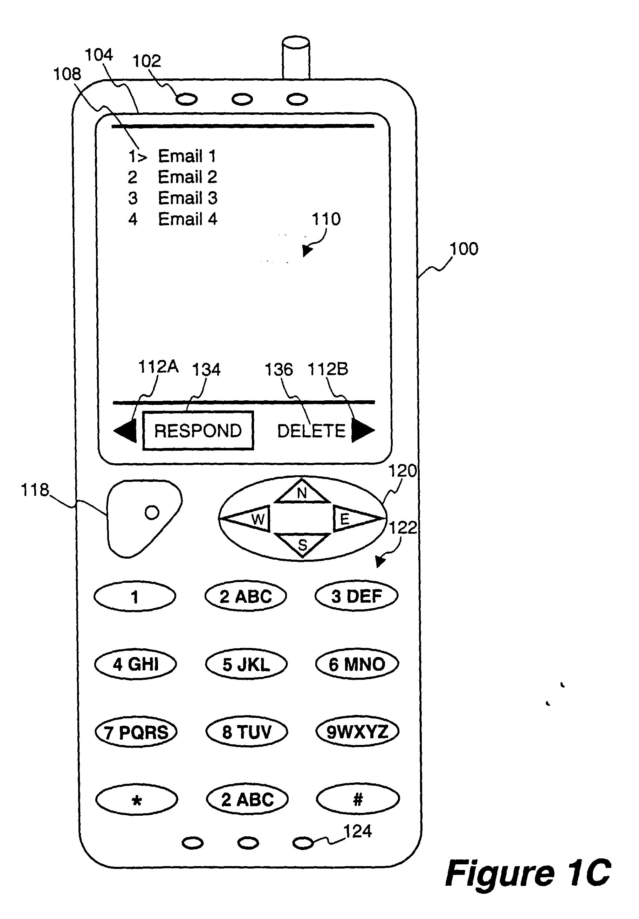

Referring now to Figure 1B, softkey 118 is assigned the softkey function "CHANGE VIEW" 130 and an identifier for an additional unassigned softkey function "RES..." 132 (a partial identifier) is provided. A user desiring to change the function assignment of softkey 118 from"CHANGE VIEW" to"RES..." may do so by interacting with the "E" portion of navigation key group 120 thus causing the mobile device 100 to display the changed softkey assignment as illustrated in Figure 1C.

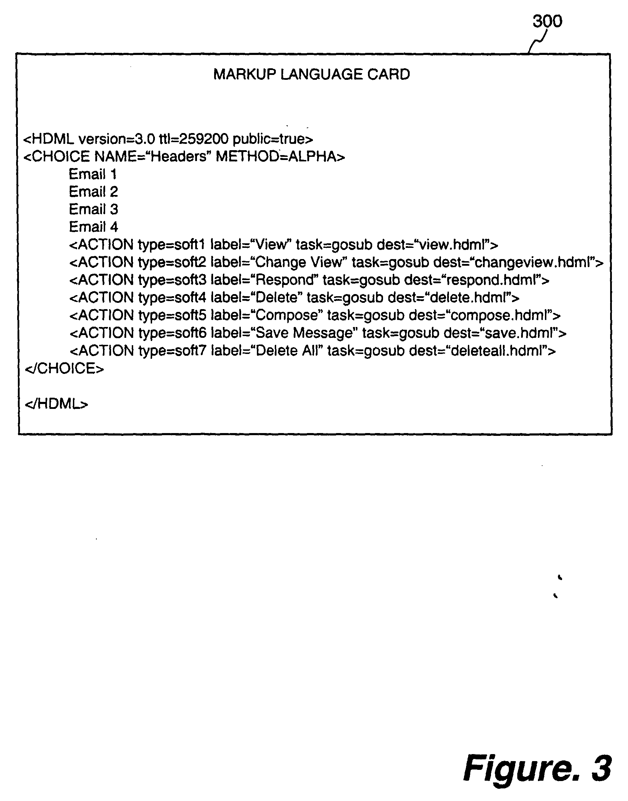

Referring now to Figure 1C, softkey 118 is assigned the softkey function "RESPOND" 134 (the full identifier for RES...) and an identifier for an additional unassigned softkey function "DELETE" 136 is provided. Note that the present invention may allocate a larger screen area for the currently assigned softkey function than the screen area for the unassigned softkey function. In this manner, a more detailed description of the currently assigned softkey is available such that user may verify that it is the desired operation. Figures 1A through 1C illustrate an embodiment of the present invention, which utilizes navigation key group 120 to scroll through and assign the available softkey functions to softkey 118. The available softkey functions are defined in the markup language file of Figure 3 that is used to generate the subject screen displays. Programming code resident on mobile device 100 processes the markup language file for the number of physical softkeys resident on the user interface of the device.

### A Softkey List Display Embodiment

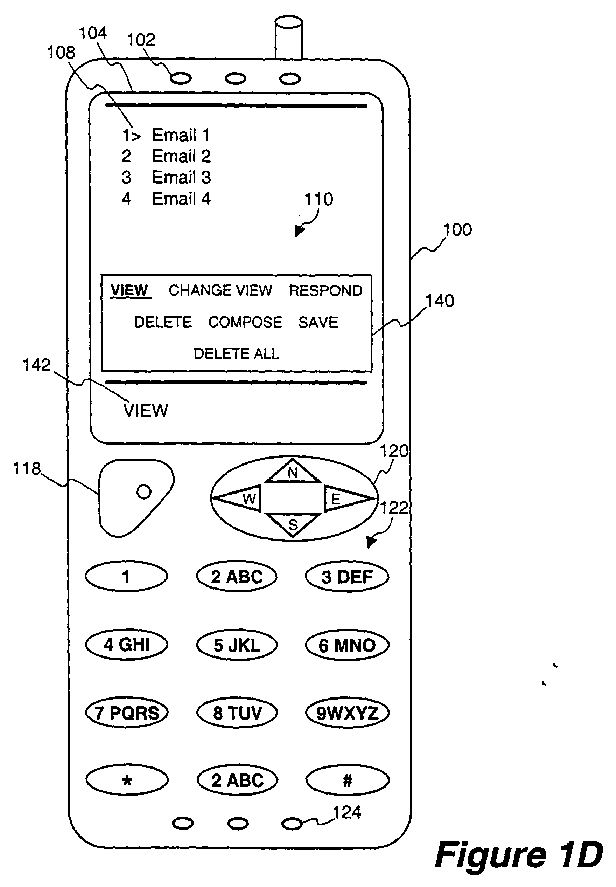

There are other ways to bring the presence of additional available softkey functions to the attention of the user of mobile device 100. Referring now to Figure 1D, according to another embodiment of the present invention the user may be presented with an overlay screen (e.g. a Softkey List) 140 that provides an indication of the currently assigned and available softkey functions. The user may initiate a "Softkey List" display and alter softkey function assignment through interaction with navigation key group 120 or another predefined key or key group.

In an alternate embodiment, the mobile device always provides a "menu" softkey function. By selecting the menu function, the mobile device would present a list of all the currently available softkey functions. Specifically, a screen displaying all the currently available softkey functions is displayed in a manner that allows a user to scroll through and select a desired softkey function.

### A Softkey Cycle Display Embodiment

According to still another embodiment of the present invention, program code stored on mobile device 100 can be utilized to cause the assigned softkey function of softkey 118 to cycle through the available softkey functions associated with a particular markup language card. In this embodiment when the subject (HDML or WML) card is first loaded, an initial softkey function is assigned to softkey 118. Softkey function cycling can occur automatically or may occur when the user of mobile device 100 interacts with a predetermined key or key group (e.g. navigation key group 120). If the user's mobile device supports all three embodiments then the user of the subject mobile device may be provided with menu screens which assist the user in selecting the method of choosing how the softkey functions are assigned to the softkey.

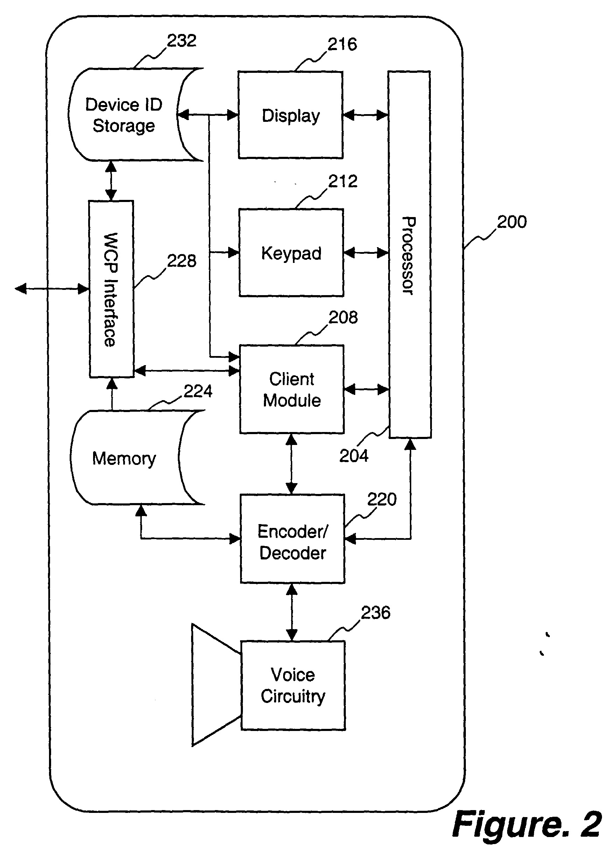

Figure 2 illustrates a functional block diagram of a mobile device 200 (which may be mobile device 100 of Figures 1A-1D). Mobile device 200 includes a client module 208 containing program code that works in conjunction with a processor 204 and working memory 224 to execute the processing tasks performed by mobile device 200. The programming tasks include: 1) processing markup language files; 2) identifying available softkey functions resident within the processed markup language files 3) assigning softkey functions to the available softkeys for interaction with the subject markup language files; and 4) managing softkey assignment when the number of softkey functions is greater than the number of available softkeys. One of ordinary skill in the art will appreciate that the navigation key assignments, the screen identifiers, and overlays may also be pre-programmed and loaded with the software for mobile device 200.

Mobile device 200 also includes voice circuitry 236 (e.g. a speaker and a microphone) and the associated hardware, which allows mobile device 200 to be used in a standard telephone mode of operation.

According to the principles of the present invention, if the number of softkey functions exceeds the number of available softkeys on the user interface of the subject mobile device then initial softkey functions are assigned to the available softkeys and the user is provided with an indication that other softkey functions are available. If the user desires to utilize those other softkey functions, then the user may navigate to those other softkey functions using a predefined key or key group (e.g. navigation key group 120 of Figure 1A).

Figure 3 illustrates a representative markup language card having multiple softkey functions that may be utilized to provide the type of screen displays illustrated in Figures 1A-1D. In this illustrative example, markup language card 300 has seven softkey functions available for interactions with the content contained on card 300. Specifically, markup language card 300 has"VIEW", "CHANGE VIEW", "RESPOND", "DELETE", "COMPOSE", "SAVE MESSAGE" and "DELETE ALL" as available softkey functions. The mobile device 100 of Figures 1A-1D has only one available softkey on its user interface. When mobile device 100 is processing markup language card 300, an initial soft softkey function (e.g. "VIEW") is assigned to the available softkey (e.g. 118 of Figure 1A). Additionally, the user of mobile device 100 is provided with an indication (e.g. indicators 112A, 112B and 116 of Figure 1A) that additional softkey functions are available. The user has the option to navigate and/or alter the softkey assignment through an interaction with a predefined key or key group (e.g. navigation key group 120 of Figure 1A).

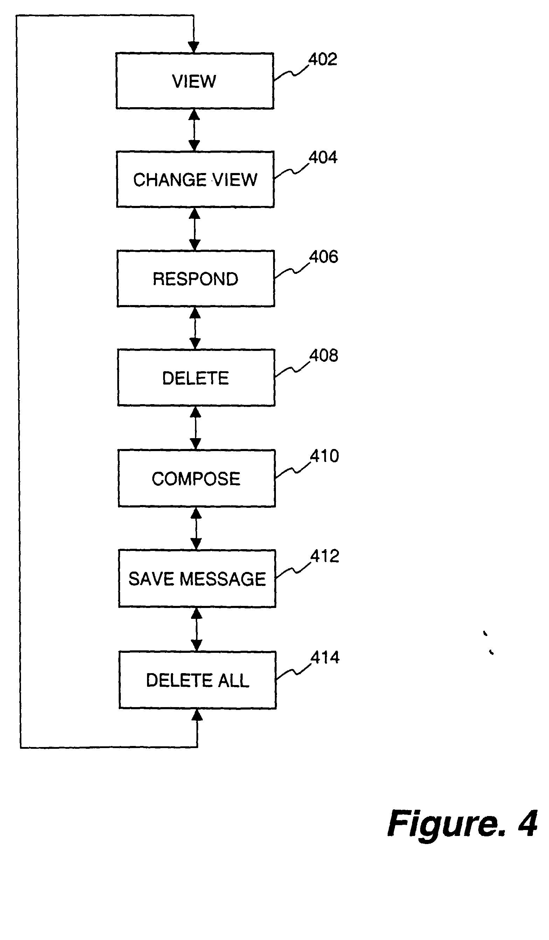

Figure 4 illustrates a rotation order that may be utilized for the softkey functions illustrated in Figure 3. In accordance with one embodiment of the present invention, if the "VIEW" function 402 is initially assigned to the single available softkey (e.g. 118 of Figure 1A), then pressing the "W" portion of navigation key group would cause the softkey to be assigned to the"DELETE ALL" function 414 and pressing the "E" portion of the navigation key group (e.g. 118 of Figure 1A) would cause the softkey to be assigned to the "CHANGE VIEW" function 404. In a similar fashion the other available softkey functions could be accessed. The vertical navigation keys of the navigation key group could still be used for navigation through the content provided on the subject markup language card (e.g. markup language card 300 of Figure 3).

Utilizing the present invention, a user desirous of interacting with the content being processed by a mobile device has maximum flexibility with respect to the utilization of available softkey functions. This invention also provides the manufactures of the mobile devices an opportunity to reclaim space from the user interface and use it for a larger display screen. The usefulness of the subject mobile devices is improved by providing users with the capability to tailor the type of softkey function presentation (e.g. scrolling, softkey lists and cycling) to their individual needs.

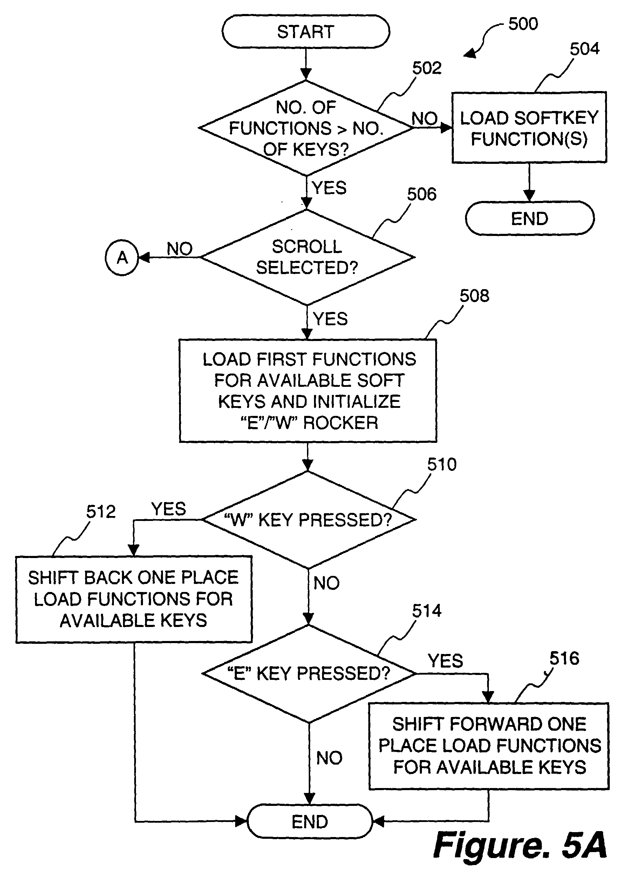

Figures 5A-5C are flow diagrams of the steps involved in managing softkey assignments for a wireless communication device having a reduced number of softkeys. Referring to Figure 5A, process 500 is utilized to manage the softkey assignments required when processing a markup language card. Upon loading of the subject markup language card a determination is made at 502 as to whether the number of associated softkey functions is greater than the number of available softkeys. If the number of softkey functions is less than or equal to the number of available softkeys then those softkey functions are assigned at 504. If instead the number of functions exceeds the number of softkeys, then at 506 a determination is made as to whether the user of the subject mobile device has pre-selected a scrolling softkey method as was previously described. If the scrolling method has been pre-selected by the user of the mobile device then a first set of softkey functions are assigned to the available softkeys. The user of the subject mobile device may then alter the softkey assignment by interacting with the "W" portion of the navigation key group (510 and 512) or the "E" portion of the navigation key group (514 and 516).

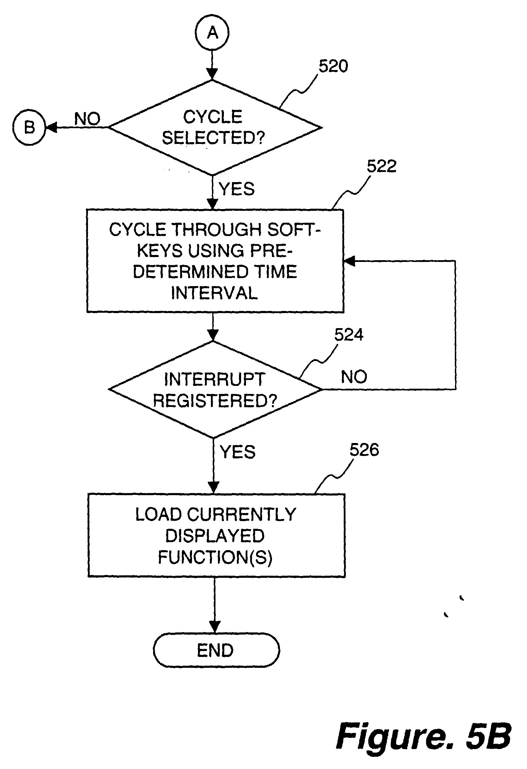

If the user of the subject mobile device has not pre-selected the scrolling method of assigning softkey functions to the available softkeys, then the process proceeds to "A" as is described in Figure 5B. At 520 a determination is made as to whether the user of the subject mobile device has pre-selected the cycle mode of operation. This mode of operation may be initialized automatically or through an interaction with a pre-determined input element on the user interface of the subject mobile device. If this process is initialized automatically, then identifiers for the available softkey are displayed on the screen display for pre-determined time intervals and then changed (522). This process continues until an interrupt is registered (524) at which time the currently displayed softkey function is assigned.

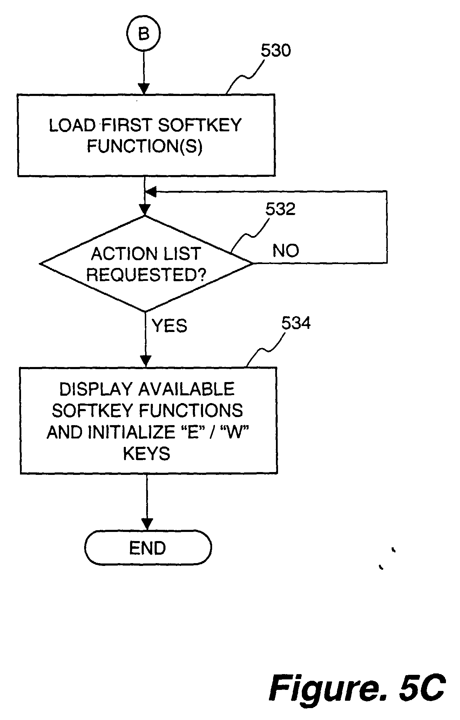

If the user of the subject mobile device has not pre-selected the scrolling method, then the process proceeds to "B" as is described in Figure 5C. At 530 a first softkey function is assigned at 530. The user may view the available softkey functions on an overlay by activating a predefined key (532). If this option is selected then an overlay listing the currently assigned soft key function and the other available softkey function is displayed at 534.

One of ordinary skill in the art would understand that the methods described above for softkey interaction (i.e. scrolling, softkey list or cycling) may be used individually or in any order without deviating from the principles of the present invention.

The invention can take the form of a computer readable code on a computer readable medium (i.e. a substrate). The computer readable medium is a data storage device that can store data, which can thereafter, be read by a computer system. Examples of a computer readable medium include read-only memory, random-access memory, CD-ROMs, magnetic tape, optical data storage devices, and carrier waves. The computer readable medium can be distributed over a network coupled computer system so that the computer readable code is stored and executed in a distributed fashion.

The advantages of the invention are numerous. Different embodiments or implementations may yield one or more of the following advantages. One advantage of the invention is that users can be visually informed about the presence of additional unassigned softkey functions and interact with those functions utilizing a pre-defined input element or element group. Another advantage of the invention is that software developers and device manufactures are not limited in terms of providing added functionality by the number of physical softkeys resident on a subject device. Still another potential advantage of the invention is that a user may select from among a plurality of softkey presentation modes.

The many features and advantages of the present invention are apparent from the written description, and thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be considered to fall within the scope of the invention.

## Claims

1. In a wireless communication device having a display screen and a user interface, a method of selecting among a plurality of available softkey functions where a number of softkey functions exceeds a number of available softkeys on said user interface, said method comprising:-
assigning a subset of said plurality of available softkey functions to said available softkeys on the user interface of said wireless communication device; and
altering assignment of said plurality of available softkey functions to said available softkeys through interaction with an input element on said user interface of said wireless communication device.

2. A method as recited in claim 1 wherein said plurality of available softkey functions is defined within a markup language entity.

3. A method as recited in claim 2 wherein said markup language entity comprises a set of markup language cards and wherein said set of markup language cards is contained in a markup language file.

4. A method as recited in any preceding claim further comprising:-
displaying an assigned softkey identifier on said display screen with a first amount of display screen space;
displaying an unassigned softkey identifier for an unassigned softkey function on said display screen with a second amount of display screen space.
wherein said first amount of display screen space exceeds said second amount of display screen space.

5. A computer product executable by a processor, the computer product including program code for managing softkey function assignment when a number of softkey functions exceeds a number of available softkeys resident on the user interface of a wireless communication device, said computer product comprising:-
computer program code for making an initial assignment of softkey functions to the softkeys available on the user interface of the wireless communication device; and
computer program code for enabling the alteration of said initial assignment and subsequent assignments of said softkey functions through an interaction with an input element on the user interface of the wireless communication device.

6. A computer product as recited in claim 5 further comprising:-computer program code for identifying softkey functions resident within a markup language entity.

7. A computer product as recited in claim 5 or 6 wherein said input element is a navigation key group.

8. In a wireless communication device having a display screen and a user interface, a method of displaying softkey functions to a user, said method comprising:-
displaying an assigned softkey identifier for an assigned softkey function on said display screen with a first amount of display screen space;
displaying an unassigned softkey identifier for an unassigned softkey function on said display screen with a second amount of display screen space;
wherein said first amount of display screen space exceeds said second amount of display screen space.

9. A wireless communication device having a display screen and user interface, said wireless communication device comprising:-
a storage device for storing a number of softkey functions that is in excess of the number of softkeys available on the user interface of the wireless communication device;
a memory for storing program code for a processor; and
a processor coupled to said storage device and said memory, wherein said processor operates to execute the program code stored in the memory to identify the softkey functions, and make an initial assignment of softkey functions to the available softkeys on the user interface of the wireless communication device and enable the alteration of the initial and subsequent softkey assignments through an interaction with an input element on the user interface of the wireless communication device.

10. A wireless communication device as described in claim 9 wherein said input elements comprises a cursor controller.
